# EUROPÄISCHE PATENTSCHRIFT

(11) **EP 1 502 812 B1**
(45) Veröffentlichungstag und Bekanntmachung des Hinweises auf die Patenterteilung: **26.04.2006**
(21) Anmeldenummer: 03017414.8
(22) Anmeldetag: 01.08.2003
(51) Int. Cl.: B60P 1/44

(54) **Hubladebühnensystem**
Lifting platform system
Système pour hayon élévateur

(43) Veröffentlichungstag der Anmeldung: 02.02.2005
(73) Patentinhaber: Bär, Gerd, 74078 Heilbronn (DE)
(72) Erfinder: Bär, Gerd, 74078 Heilbronn (DE)
(74) Vertreter: Dreiss, Fuhlendorf, Steimle & Becker

(56) Entgegenhaltungen:
- EP-A- 0 980 786
- EP-A- 1 106 431
- EP-A- 1 221 399
- EP-A- 1 223 077
- DE-C- 10 205 669

## Beschreibung

Die vorliegende Erfindung betrifft ein Hubladebühnensystem zur Befestigung an Fahrzeugen mit einer Plattform und einem im Wesentlichen parallelogrammförmigen Hubwerk, das zwei horizontal beabstandete Tragarme zum Tragen der Plattform, einen Parallelzylinder für das Verschwenken der Plattform von ihrer vertikalen Fahrtstellung in ihre horizontale Arbeitsstellung und umgekehrt sowie einen Hubzylinder zum Heben und Senken der Plattform in ihrer Arbeitsstellung umfasst, wobei der Hubzylinder an einem Hubzylinderhebel, der um die Schwenkachse der Tragarme verdrehbar ist, angreift und mit diesem ein Kräftedreieck bildet und wobei der eine, erste Tragarm mit dem Hubzylinderhebel elastisch in Hubrichtung bewegungsgekoppelt und der andere, zweite Tragarm mittels eines Torsionsprofils mit dem Hubzylinderhebel verbunden ist.

Ein derartiges Hubladebühnensystem ist beispielsweise durch EP-A-0 980 786 bekannt geworden.

Bei dem aus **EP-A-0 980 786** bekannten Hubladebühnensystem ist der Hubzylinderhebel gegenüber dem zugeordneten, ersten Tragarm horizontal versetzt. Der Hubzylinderhebel und der erste Tragarm sind unabhängig voneinander um die gemeinsame Drehachse drehbar gelagert und in radialem Abstand zur gemeinsamen Drehachse durch einen Bolzen miteinander verbunden, so dass das plattformseitige, freie Ende des ersten Tragarms mit dem Hubzylinderhebel in Hubrichtung elastisch federnd bewegungsgekoppelt ist. Nach Anheben der Plattform bis auf Höhe der Lkw-Ladefläche ist durch weiteres Beaufschlagen des Hubzylinders eine weitere Hubbewegung des Hubzylinderhebels möglich, die über das Torsionsrohr auf den zweiten Tragarm übertragen wird. Dadurch kann ein absatz- und spaltfreier Übergang von der Plattform zum Lkw-Ladeboden erreicht werden, und zwar auch bei einseitiger Beladung der Plattform.

Aus **EP-A-0 808 747** ist weiterhin ein Hubladebühnensystem bekannt, bei dem der eine, erste Tragarm zwischen zwei parallel beabstandeten Armen angeordnet ist. Diese beiden Arme bilden mit dem Hubzylinder ein Kräftedreieck und sind um die Drehachse der beiden Tragarme drehbar gelagert. Der erste Tragarm ist in radialem Abstand zur Drehachse mittels einer Quertraverse an beide Arme angeschweißt, so dass sein plattformseitiges, freies Ende mit dem Hubantrieb in Hubrichtung elastisch federnd bewegungsgekoppelt ist.

Außerdem ist aus **EP-A-1 106 431** ein Hubladebühnensystem bekannt, bei dem an dem Arm, der mit dem Hubzylinder ein Kräftedreieck bildet, eine Feder abgestützt ist, die anderenends die Plattform trägt. Mittels der Feder ist die Plattform mit dem Hubantrieb elastisch federnd in Hubrichtung bewegungsgekoppelt.

Aus **EP-A-1 221 399** ist ein Hubladebühnensystem mit einem horizontal neben dem ersten Tragarm angeordneten Parallelarm bekannt, der unabhängig vom ersten Tragarm um die gemeinsame Drehachse drehbar gelagert ist und an seinem anderen Ende über ein Kreuzgelenk mit dem ersten Tragarm verbunden ist. Der Hubzylinder greift am Kreuzgelenk zwischen erstem Tragarm und Parallelarm an. Durch ein Federelement, das einerseits am ersten Tragarm und andererseits am Torsionsrohr abgestützt ist, ist der erste Tragarm mit dem Hubantrieb elastisch federnd in Hubrichtung bewegungsgekoppelt.

Schließlich ist aus **DE-C-102 05 669** noch ein Hubladebühnensystem bekannt, bei dem der Hubzylinder mittels einer elastischen Ausgleichseinheit am ersten Tragarm angreift. Die elastische Ausgleichseinheit ist am ersten Tragarm gegen die Wirkung einer Feder verdrehbar gelagert und bewirkt, dass nach Anheben der Ladeplattform bis auf Höhe der Lkw-Ladefläche durch weiteres Beaufschlagen des Hubzylinders die Ausgleichseinheit entgegen der Wirkung der Feder weiter bewegt wird. Diese Bewegung wird durch das Torsionsrohr auf den zweiten Tragarm übertragen.

Demgegenüber ist es die Aufgabe der vorliegenden Erfindung, ein Hubladebühnensystem der eingangs genannten Art weiter zu vereinfachen.

Diese Aufgabe wird erfindungsgemäß dadurch gelöst, dass die elastische Bewegungskopplung durch eine Federeinheit gebildet ist, die einerseits am ersten Tragarm und andererseits am Hubzylinderhebel oder am Ende des Hubzylinders abgestützt ist.

In einer bevorzugten Ausführungsform der Erfindung sind der erste Tragarm und der Hubzylinderhebel unabhängig voneinander um die gemeinsame Drehachse drehbar gelagert. In einer anderen bevorzugten Ausführungsform ist der erste Tragarm am Hubzylinderhebel in radialem Abstand (z.B. ca. 100 mm) zu dessen Drehachse drehbar gelagert.

Vorzugsweise weist die Federeinheit eine Druckfeder, insbesondere eine Schraubenfeder oder eine Gummifeder (z.B. aus Polyurethan), auf.

Bevorzugt weist der Hubzylinderhebel zwei parallel beabstandete Arme auf, zwischen denen der erste Tragarm angeordnet ist. Um zu verhindern, dass sich die beiden Arme des Hubzylinderhebels gegeneinander verdrehen, ist an einem Arm des Hubzylinderhebels, insbesondere am innenseitigen Arm, eine das Torsionsprofil tragende Anschlusseinrichtung befestigt, die auf dem anderen Arm aufliegt.

Weitere vorteilhafte Ausgestaltungen der Erfindung sind Gegenstand der Unteransprüche.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: schematisch eine erste Ausführungsform des erfindungsgemäßen Hubladebühnensystems, bei dem der erste Tragarm und der Hubzylinderhebel unabhängig voneinander um die gemeinsame Drehachse drehbar gelagert sind;
- Fig. 2: schematisch eine zweite Ausführungsform des erfindungsgemäßen Hubladebühnensystems, bei dem der erste Tragarm am Hubzylinderhebel in radialem Abstand zu dessen Drehachse drehbar gelagert ist, in einer Darstellung analog zur Fig. 1;
- Fig. 3: eine Seitenansicht des in Fig. 2 linken Tragwerks des Hubladebühnensystems gemäß III in Fig. 2 mit einer in Fig. 2 nicht gezeigten Anschlusseinrichtung; und
- Fig. 4: die Draufsicht auf das in Fig. 3 gezeigte linke Tragwerk des Hubladebühnensystems.

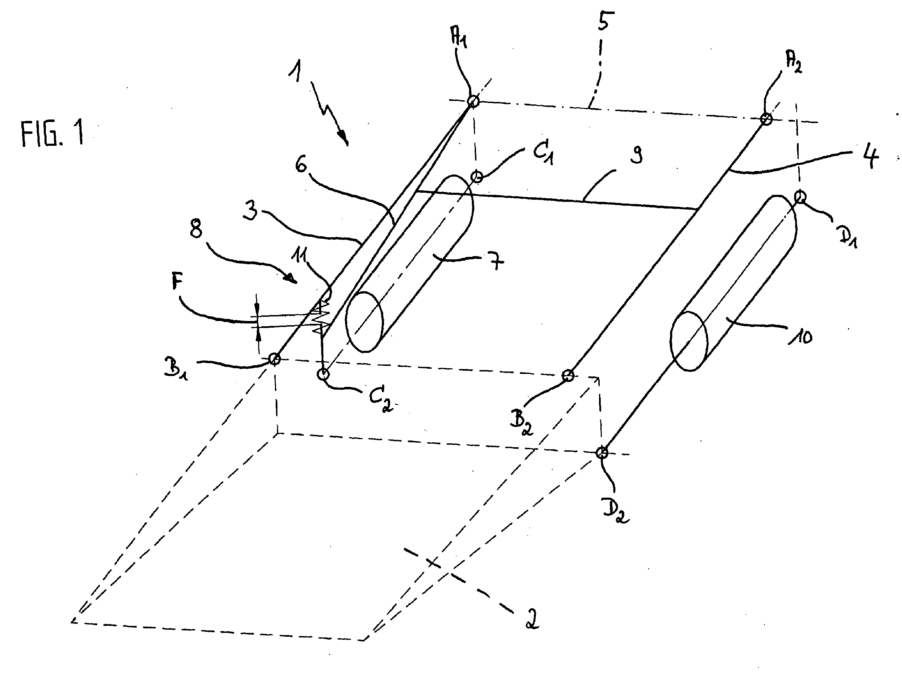

Bei dem in **Fig. 1** schematisch gezeigten Hubladebühnensystem **1** ist auf die Darstellung der Befestigung am Fahrgestellrahmen aus Übersichtsgründen verzichtet. Die die Plattform **2** tragenden Systempunkte sind **A**_{**1**} und **B**_{**1**}**, A**_{**2**} und **B**_{**2**} sowie **D**_{**1**} und **D**_{**2**}**.**

Das Hubladebühnensystem 1 hat ein parallelogrammförmiges Hubwerk, dessen Basiselemente zwei Tragarme **3** und **4** sind, welche um die gemeinsame Drehachse **5** in den Drehpunkten A₁ bzw. A₂ fahrzeugseitig schwenkbar gelagert sind. Unter dem einen, ersten Tragarm **3** sind ein Hubzylinderhebel **6** und ein Hubzylinder **7** angeordnet. Fahrzeugseitig ist der Hubzylinder 7 um den Drehpunkt **C**₁ und der Hubzylinderhebel 7 bei A₁ unabhängig vom ersten Tragarm 3 um die Drehachse 5 schwenkbar gelagert, Der Hubzylinder 7 greift am Hubzylinderhebel 6 bei **C**₂ an und bildet so mit diesem ein Kräftedreieck C₁, C₂, A₁. Die Kraft des Hubzylinders 7 wird im Punkt C₂ in den Hubzylinderhebel 6 eingeleitet, der eine Radiusbewegung um seinen Drehpunkt A₁ beschreibt.

Die Übertragung der Drehbewegung und der Kräfte vom Hubzyfinderhebel 6 erfolgt auf den ersten Tragarm 3 über eine dazwischen wirkende Federeinheit **8** und auf den zweiten Tragarm 4 durch ein relativ langes Torsions- und Biegeprofil (Torsionsrohr) **9.** Da dieses noch zusätzlich die Funktion eines Unterfahrschutzes hat, kann es nicht im Bereich der beiden Tragarme 3, 4 liegen und ist daher unter ihnen jeweils über Anschlusseinrichtungen (in Fig. 1 nicht gezeigt) am Hubzylinderhebel 6 bzw. am zweiten Tragarm 4 drehfest befestigt. Aufgrund der relativ großen Länge des Torsions- und Biegeprofils 9 resultiert bei gleicher Belastung ein großer Torsionswinkel. Naturgemäß hat diese Kräfteumleitung eine viel größere Elastizität und gibt daher im Ergebnis eine größere elastische Durchfederung mit der Auswirkung eines größeren Drehwinkels des zweiten Tragarmes 4 um seinen Drehpunkt A₂ gegenüber dem ersten Tragarm 3 um seinen Drehpunkt A₁.

Da am Hubzylinderhebel 6 das Torsionsrohr 9 befestigt ist, welches je nach Belastung dem Drehwinkel des ersten Tragarmes 3 vorauseilt, werden dadurch der große Torsionswinkel und die Elastizität der Anschlusseinrichtungen kompensiert. Damit wird erreicht, dass sich in der Konsequenz der erste und zweite Tragarm 3, 4 synchron zueinander bewegen.

Ein Parallelzylinder **10** ist fahrzeugseitig im Punkt D₁ und an der Plattform 2 bei D₂ angelenkt und hat Funktionen, wie das Schließen der Plattform etc., die allgemein bekannt sind und auf die daher hier nicht eingegangen wird. Er dient außerdem zur Parallelführung und ist dazu, nach innen gegenüber dem zweiten Tragarm 4 horizontal versetzt, parallel zum zweiten Tragarm 4 angeordnet. Bei der Hub- und Senkbewegung wirkt der Parallelzylinder 10 als statische Druckstrebe.

Die Federeinheit 8 ist durch eine Gummifeder 11 gebildet, die so weit (maximaler Federweg **F**) zusammengedrückt werden kann, bis ein Anschlagzapfen des Hubzylinderhebels 6 an einem Anschlagzapfen des ersten Tragarms 3 anliegt.

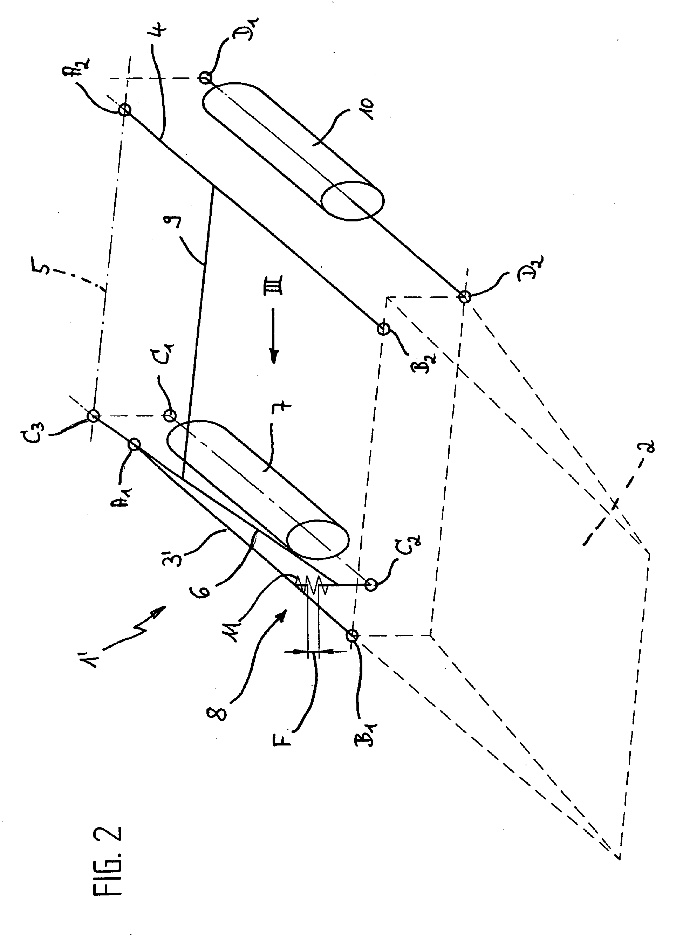

Von diesem Hubladebühnensystem 1 unterscheidet sich das in **Fig. 2** gezeigte Hubladebühnensystem **1**' lediglich dadurch, dass der erste Tragarm **3**' am Hubzylinderhebel 6 in radialem Abstand (z.B. 100 mm) zu dessen Drehachse 5 im Drehpunkt A₁ drehbar gelagert ist.

Nach Anheben der Plattform 2 bis auf Höhe der Lkw-Ladefläche ist durch weiteres Beaufschlagen des Hubzylinders 7 eine weitere Hubbewegung des Hubzylinderhebels 6 möglich, die über das Torsionsrohr 9 auf den zweiten Tragarm 4 übertragen wird. Dies gilt insbesondere für die unbeladene Plattform. Dadurch kann ein absatz- und spaltfreier Übergang von der Plattform 2 zum Lkw-Ladeboden erreicht werden, und zwar auch bei einseitig, teilweise oder vollständig beladener Plattform 2.

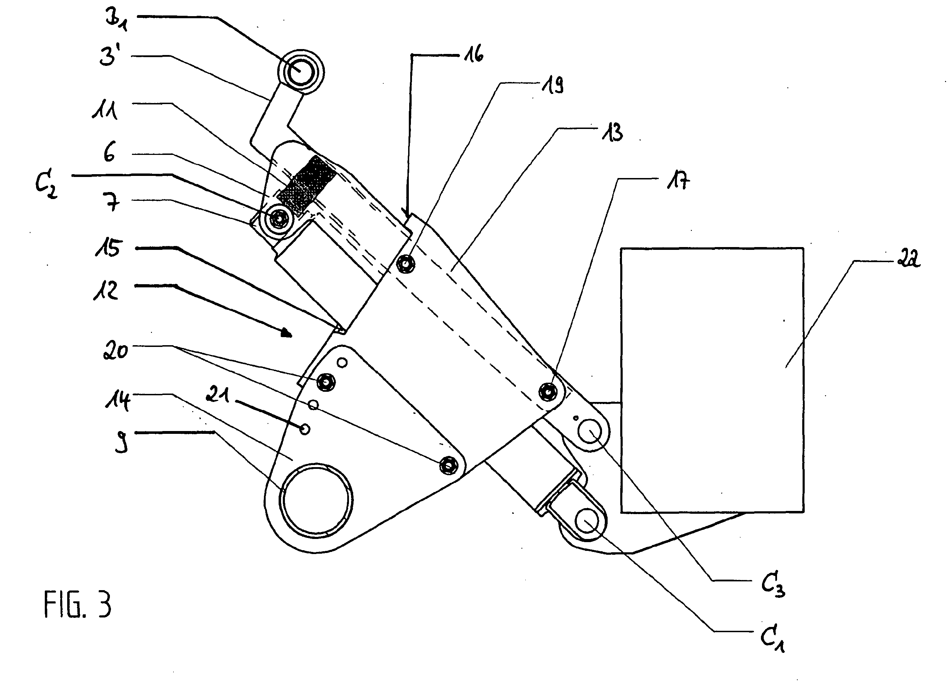

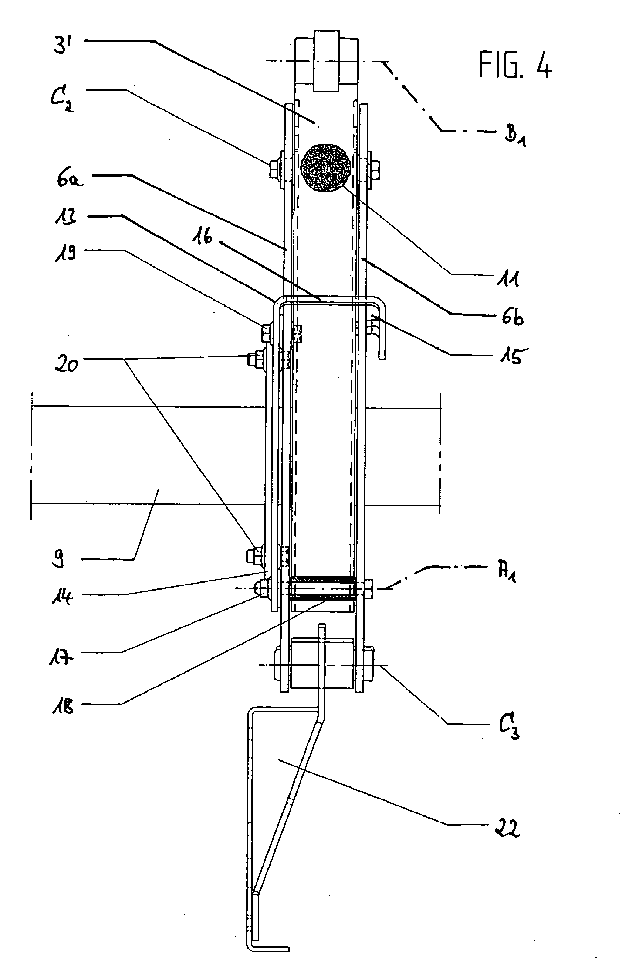

**Fig. 3** zeigt, dass das Torsionsrohr 9 auf der Hubzylinderseite mittels einer Anschlusseinrichtung **12** am Hubzylinderhebel 6 befestigt ist. Wie in **Fig.** 4 gezeigt, ist der Hubzylinderhebel 6 durch zwei parallel beabstandete Arme **6a, 6b** gebildet, zwischen denen der erste Tragarm 3' angeordnet ist. Die Anschlusseinrichtung 12 umfasst zwei miteinander verschraubte Anschlussplatten **13, 14.**

Die erste Anschlussplatte 13 ist zweimal abgekantet und hat ein großes Fenster **15,** durch das sich der erste Tragarm 3', die beiden Arme 6a, 6b des Hubzylinderhebels 6 und der Hubzylinderhebel 7 erstrecken, und einen oberen Steg **16,** mit dem die erste Anschlussplatte 13 auf den beiden Arme 6a, 6b aufliegt. Befestigt wird die erste Anschlussplatte 13 in 100 mm Abstand zum Drehpunkt C₃ des Hubzylinderhebels 6 mittels einer durchgängigen Schraube **17,** die durch beide Arme 6a, 6b des Hubzylinderhebels 6 geht und einen Distanz(hohl)-Bolzen **18** hat, der die beiden Arme 6a, 6b distanziert. Auf diesem Distanzbolzen 18 ist der erste Tragarm 3' gelagert, der an seinem anderen Ende auf der Gummifeder 11 aufliegt. Die zweite Befestigung der ersten Anschlussplatte 13 erfolgt durch eine zweite Schraube **19,** die nur den innenseitigen Arm 6a des Hubzylinderhebels 6 mit der ersten Anschlussplatte 13 verbindet. Diese Schraubverbindung wird nur gebraucht, damit die Anschlusseinrichtung 12 sich bei externen Unterfahrschutzkräften nicht nach oben wegdrehen kann und mit ihrem unteren Bereich des Fensters 15 nicht gegen die Hubzylinderkolbenstange schlägt. Die Betriebskräfte, die vom Hubzylinder 7 bzw. dessen Kräftedreieck über die Arme 6a, 6b des Hubzylinderhebels 6 in die Anschlusseinrichtung 12 eingeleitet werden, gehen ausschließlich über die formschlüssige Verbindung, welche die beiden Arme 6a, 6b auf den oberen Steg 16 der Anschlusseinrichtung 12 übertragen. Ohne die Auflage der ersten Anschlussplatte 13 auf dem außenseitigen Arm 6b besteht die Gefahr, dass sich der gesamte Hubarm, d.h. Tragarm 3', Arme 6a, 6b und der Hubzylinder 7 wegen der einseitigen Befestigung der ersten Anschlussplatte 13 am innenseitigen Arm 6a unter Belastung verdreht.

Die zweite Anschlussplatte 14 ist mittels zweier Schrauben **20** an der ersten Anschlussplatte 13 befestigt. In der zweiten Anschlussplatte 14 sind für die eine Schraube mehrere Befestigungslöcher **21** auf dem Radius um die andere Schraube vorgesehen, um die zweite Anschlussplatte 14 und damit das den Unterfahrschutz bildende Torsionsrohr 9 in der Höhe verstellen zu können. In den Fign. 3 und 4 ist außerdem der fahrzeugseitige Anschlussflansch **22** dargestellt, an dem die beiden Arme 6a, 6b des Hubzylinderhebels 6 und der Hubzylinder 7 drehbar gelagert sind.

## Patentansprüche

1. Hubladebühnensystem (1; 1') zur Befestigung an Fahrzeugen, mit einer Plattform (2) und einem im Wesentlichen parallelogrammförmigen Hubwerk, das zwei horizontal beabstandete Tragarme (3, 3', 4) zum Tragen der Plattform (2), einen Parallelzylinder (10) für das Verschwenken der Plattform (2) von ihrer vertikalen Fahrtstellung in ihre horizontale Arbeitsstellung und umgekehrt sowie einen Hubzylinder (7) zum Heben und Senken der Plattform (2) in ihrer Arbeitsstellung umfasst, wobei der Hubzylinder (7) an einem Hubzylinderhebel (6), der um die Schwenkachse (5) der Tragarme (3, 3', 4) verdrehbar ist, angreift und mit diesem ein Kräftedreieck bildet und wobei der eine, erste Tragarm (3, 3') mit dem Hubzylinderhebel (6) elastisch in Hubrichtung bewegungsgekoppelt und der andere, zweite Tragarm (4) mittels eines Torsionsprofils (9) mit dem Hubzylinderhebel (6) verbunden ist,
**dadurch gekennzeichnet,**
**dass** die elastische Bewegungskopplung durch eine Federeinheit (8) gebildet ist, die einerseits am ersten Tragarm (3, 3') und andererseits am Hubzylinderhebel (6) oder am Ende des Hubzylinders (7) abgestützt ist.

2. Hubladebühnensystem nach Anspruch 1, **dadurch gekennzeichnet, dass** der erste Tragarm (3) und der Hubzylinderhebel (6) unabhängig voneinander um die gemeinsame Drehachse (5) drehbar gelagert sind.

3. Hubladebühnensystem nach Anspruch 1, **dadurch gekennzeichnet, dass** der erste Tragarm (3') am Hubzylinderhebel (6) in radialem Abstand zu dessen Drehachse (5) drehbar gelagert ist.

4. Hubladebühnensystem nach einem der vorhergehenden Ansprüche, **dadurch gekennzeichnet, dass** die Federeinheit (8) eine Druckfeder, insbesondere eine Gummifeder (11), aufweist.

5. Hubladebühnensystem nach einem der vorhergehenden Ansprüche, **dadurch gekennzeichnet, dass** der Hubzylinderhebel (6) zwei parallel beabstandete Arme (6a, 6b) aufweist, zwischen denen der erste Tragarm (3, 3') angeordnet ist.

6. Hubladebühnensystem nach Anspruch 5, **dadurch gekennzeichnet, dass** an einem Arm des Hubzylinderhebels (6), insbesondere am innenseitigen Arm (6a), eine das Torsionsprofil (9) tragende Anschlusseinrichtung (12) befestigt ist, die auf dem anderen Arm des Hubzylinderhebels (6) aufliegt.

7. Hubladebühnensystem nach Anspruch 6, **dadurch gekennzeichnet, dass** die Anschlusseinrichtung (12) seitlich an dem einen Arm des Hubzylinderhebels (6), insbesondere am innenseitigen Arm (6a), befestigt ist und auf beiden Armen (6a, 6b) aufliegt.

8. Hubladebühnensystem nach Anspruch 6 oder 7, **dadurch gekennzeichnet, dass** die Anschlusseinrichtung (12) eine Anschlussplatte (13) mit einem Fenster (15), durch das sich der erste Tragarm (3, 3'), die beiden Arme (6a, 6b) des Hubzylinderhebels (6) und der Hubzylinder (7) erstrecken, und mit einem oberen Steg (16) aufweist, der auf beiden Arme (6a, 6b) aufliegt.

## Claims

1. Lifting platform system (1; 1') for fixing to vehicles, having a platform (2) and a substantially parallelogram-shaped lifting mechanism, which comprises two horizontally spaced carrier arms (3, 3', 4) for carrying the platform (2), a parallel cylinder (10) for pivoting the platform (2) from its vertical travelling position into its horizontal working position and vice versa, and a lifting cylinder (7) for raising and lowering the platform (2) in its working position, the lifting cylinder (7) acting on a lifting cylinder lever (6), which can be rotated about the pivot axis (5) of the carrier arms (3, 3', 4), and forming a force triangle with the said lever (6), and the one, first carrier arm (3, 3') being coupled resiliently to the lifting cylinder lever (6) in terms of movement in the lifting direction and the other, second carrier arm (4) being connected to the lifting cylinder lever (6) by means of a torsional profile (9), **characterized in that** the resilient coupling of the movement is formed by a spring unit (8) which, at one end, is supported on the first carrier arm (3, 3'), and, at the other end, is supported on the lifting cylinder lever (6) or on the end of the lifting cylinder (7).

2. Lifting platform system according to Claim 1, **characterized in that** the first carrier arm (3) and the lifting cylinder lever (6) are mounted such that they can be rotated independently of each other about the common axis of rotation (5).

3. Lifting platform system according to Claim 1, **characterized in that** the first carrier arm (3') is mounted on the lifting cylinder lever (6) such that it can be rotated at a radial distance from the axis of rotation (5) of the said lever.

4. Lifting platform system according to one of the preceding claims, **characterized in that** the spring unit (8) has a compression spring, in particular a rubber spring (11).

5. Lifting platform system according to one of the preceding claims, **characterized in that** the lifting cylinder lever (6) has two parallel-spaced arms (6a, 6b), between which the first carrier arm (3, 3') is arranged.

6. Lifting platform system according to Claim 5, **characterized in that** a connecting device (12) carrying the torsion profile (9) is fixed to one arm of the lifting cylinder lever (6), in particular the inside arm (6a), the said connecting device (12) bearing on the other arm (4) of the lifting cylinder (6).

7. Lifting platform system according to Claim 6, **characterized in that** the connecting device (12) is fixed laterally to the one arm of the lifting cylinder lever (6), in particular to the inside arm (6a), and rests on both arms (6a, 6b).

8. Lifting platform system according to Claim 6 or 7, **characterized in that** the connecting device (12) has a connecting plate (13) with a window (15), through which the first carrier arm (3, 3'), the two arms (6a, 6b) of the lifting cylinder lever (6) and the lifting cylinder (7) extend, and an upper web (16), which rests on both arms (6a, 6b).

## Revendications

1. Système de hayon élévateur (1 ; 1') destiné à être fixé sur des véhicules, comportant une plateforme (2) et un dispositif de levage sensiblement en forme de parallélogramme, qui comprend deux bras portants (3, 3', 4) espacés à l'horizontale pour porter la plateforme (2), un cylindre parallèle (10) pour le pivotement de la plateforme (2) depuis sa position de circulation verticale jusque dans une position de travail horizontale et inversement, ainsi qu'un cylindre de levage (7) pour lever et abaisser la plateforme (2) jusque dans sa position de travail, le cylindre de levage (7) s'engageant sur un levier (6) de cylindre de levage qui est rotatif autour de l'axe de pivotement (5) des bras portants (3, 3', 4) et formant avec celui-ci un triangle d'effort, et le premier bras portant (3, 3') étant accouplé au levier (6) de cylindre de levage avec faculté de mouvement élastique en direction de levage, et le deuxième bras portant (4) étant relié au levier (6) de cylindre de levage au moyen d'un profil de torsion (9),
**caractérisé en ce que** l'accouplement avec faculté de mouvement élastique est formé par une unité à ressort (8) qui est soutenue d'une part sur le premier bras portant (3, 3') et d'autre part sur le levier (6) de cylindre de levage ou sur l'extrémité du cylindre de levage (7).

2. Système de hayon élévateur selon la revendication 1, **caractérisé en ce que** le premier bras portant (3) et le levier (6) de cylindre de levage sont montés rotatifs autour d'un axe de rotation (5) commun, indépendamment l'un de l'autre.

3. Système de hayon élévateur selon la revendication 1, **caractérisé en ce que** le premier bras portant (3') est monté rotatif sur le levier (6) de cylindre de levage à distance radiale par rapport à son axe de rotation (5).

4. Système de hayon élévateur selon l'une des revendications précédentes, **caractérisé en ce que** l'unité à ressort (8) présente un ressort de compression, en particulier un ressort en caoutchouc (11).

5. Système de hayon élévateur selon l'une des revendications précédentes, **caractérisé en ce que** le levier (6) de cylindre de levage présente deux bras (6a, 6b) espacés parallèlement, entre lesquels est agencé le premier bras portant (3, 3').

6. Système de hayon élévateur selon la revendication 5, **caractérisé en ce que** sur un bras du levier (6) de cylindre de levage, en particulier sur le bras (6a) côté intérieur, est fixé un dispositif de raccordement (12) portant le profil de torsion (9) et reposant sur l'autre bras du levier (6) de cylindre de levage.

7. Système de hayon élévateur selon la revendication 6, **caractérisé en ce que** le dispositif de raccordement (12) est fixé latéralement sur ledit un bras du levier (6) de cylindre de levage, en particulier sur le bras (6a) côté intérieur, et il repose sur les deux bras (6a, 6b).

8. Système de hayon élévateur selon l'une ou l'autre des revendications 6 et 7, **caractérisé en ce que** le dispositif de raccordement (12) présente une plaque de raccordement (13) avec une fenêtre (15) à travers laquelle s'étendent le premier bras portant (3, 3'), les deux bras (6a, 6b) du levier (6) de cylindre de levage et le cylindre de levage (7), et avec une traverse supérieure (16) qui repose sur les deux bras (6a, 6b).
